# EUROPÄISCHE PATENTSCHRIFT

(11) **EP 4 017 748 B1**
(45) Veröffentlichungstag und Bekanntmachung des Hinweises auf die Patenterteilung: **11.12.2024**
(21) Anmeldenummer: 20757826.1
(22) Anmeldetag: 15.07.2020
(51) Int. Cl.: B60K 23/00, B60L 53/16, E05B 81/90, H01R 13/62, H01R 13/639, E05B 47/00

(54) **ELEKTRISCHE LADEVORRICHTUNG FÜR EIN KRAFTFAHRZEUG**
ELECTRIC CHARGING DEVICE FOR A MOTOR VEHICLE
DISPOSITIF DE CHARGE ÉLECTRIQUE POUR UN VÉHICULE À MOTEUR

(30) Priorität: 21.08.2019 DE 102019122419
(43) Veröffentlichungstag der Anmeldung: 29.06.2022
(73) Patentinhaber: Kiekert Aktiengesellschaft, 42579 Heiligenhaus (DE)
(72) Erfinder: ÖZDOGAN, Murat, 42109 Wuppertal (DE)
(74) Vertreter: Kiekert AG Patentabteilung
(86) Internationale Anmeldenummer: PCT/DE2020/100618
(87) Internationale Veröffentlichungsnummer: WO 2021/032234

(56) Entgegenhaltungen:
- WO-A1-2019/073854
- DE-A1- 102017 123 206
- DE-A1- 102017 123 209
- DE-T5- 112018 004 505
- DE-U1- 20 208 246
- US-A1- 2016 312 499

## Beschreibung

Die Erfindung betrifft eine elektrische Ladevorrichtung für ein Kraftfahrzeug, insbesondere ein Elektro- oder Hybridkraftfahrzeug, mit einer kraftfahrzeugseitigen Ladesteckdose und einem ladesäulenseitigen Ladestecker, oder umgekehrt, und mit einem motorisch durch einen Antrieb verfahrbaren Riegelelement zur lösbaren Verriegelung des Ladesteckers in der Ladesteckdose, wobei zur Notentriegelung des Riegelelementes ein mit Hilfe eines Werkzeuges manuell beaufschlagbares Betätigungselement vorgesehen ist. - Der Ladestecker kann grundsätzlich auch kraftfahrzeugseitig und die Ladesteckdose ladensäulenseitig vorgesehen sein.

Akkumulatoren von Elektro- oder Hybridkraftfahrzeugen müssen regelmäßig mit elektrischer Energie versorgt werden. Das geschieht unter Rückgriff auf eine Ladeinfrastruktur, zu welcher typischerweise eine oder mehrere Ladesäulen gehören. Für den Ladevorgang mit elektrischer Energie wird im Allgemeinen der Ladestecker der Ladesäule mit der kraftfahrzeugseitigen Ladesteckdose gekoppelt. Es kann aber auch umgekehrt vorgegangen werden. Dann ist die Ladesäule mit der Ladesteckdose ausgerüstet, wohingegen kraftfahrzeugseitig der Ladestecker realisiert ist.

Die lösbare Verriegelung des Ladesteckers gegenüber der Ladesteckdose ist erforderlich, um beispielsweise Gesundheitsgefährdungen von Benutzern zu vermeiden. Denn an dieser Stelle wird im Allgemeinen mit Hochspannung gearbeitet, die mehrere 100 V betragen kann. Außerdem stellt die Verriegelung sicher, dass ausschließlich zuvor identifizierte Benutzer die von der Ladesäule zur Verfügung gestellte Energie auch rechtmäßig beziehen und Missbrauch verhindert wird. Zu diesem Zweck findet meistens vor einem solchen Ladevorgang eine Identifizierung des Bedieners und eine Berechtigungsprüfung mit Hilfe eines Identifikationssignals statt, wie dies grundsätzlich in der WO 2010/149426 A1 beschrieben wird.

Die Verstellung des Riegelelementes wird im Stand der Technik nach der CN 2029695855 U typischerweise mit Hilfe eines elektromotorischen Antriebes vorgenommen. Der elektromotorische Antrieb setzt sich seinerseits aus einem Elektromotor und einem nachgeschalteten oftmals mehrstufigen Getriebe zusammen. Das mehrstufige Getriebe arbeitet seinerseits über einen Nocken auf das Riegelelement.

Darüber hinaus kennt man Lösungen im Stand der Technik nach der DE 10 2011 10 809 A1, bei welchen eine Verriegelungsvorrichtung realisiert ist, die mit einem mechanischen Riegel arbeitet. Der mechanische Riegel kann elektromotorisch betrieben werden. Auf diese Weise greift der mechanische Riegel in Nuten am Ladestecker ein und sorgt so dafür, dass der Stecker bzw. Ladestecker mit Hilfe der Verriegelungseinrichtung im Innern der Ladesteckdose verriegelt wird.

Eine andere Verriegelungsvorrichtung insbesondere für einen Ladestecker ist durch die gattungsbildende DE 10 2011 050 783 A1 bekannt geworden. Auch in diesem Fall ist ein elektromechanischer Antrieb für das Riegelelement vorgesehen, mit dessen Hilfe ein Wechsel zwischen einer Verriegelungsstellung und Entriegelungsstellung des Riegelelementes vorgenommen werden kann. Außerdem wird bereits eine Notentriegelung für einen Notfall angesprochen. Im Rahmen der Notentriegelung wird das Sperrmittel aus einer Verriegelungsstellung in seine Entriegelungsstellung überführt.

Ein solcher Notfall bzw. eine Notentriegelung ist unter anderem dann erforderlich, wenn die Fahrzeugelektronik oder der Antrieb für das Riegelelement bzw. Sperrmittel ausfällt. Als Folge hiervon kann der Ladestecker nicht mehr vom Fahrzeug entfernt werden. Dadurch ist eine Weiterfahrt oder auch ein Abschleppen des Fahrzeuges kaum möglich.

Bei der DE 10 2011 050 783 A1 dient für die Notentriegelung letztendlich ein Zugmittel, mit dessen Hilfe zumindest ein Teil des Riegelelementes im Notfall bewegt werden kann. Bei dem Zugmittel kann es sich um ein Seil, einen Bowdenzug oder eine Stange bzw. einen Hebel handeln, welcher im Fahrzeuginnenraum endet, wodurch das Zugmittel von einem Benutzer im Notfall bedient werden kann. Insofern stellt das Zugmittel beispielsweise in Verbindung mit einem Hebel das zuvor angesprochene Werkzeug und hierdurch manuell beaufschlagbare Betätigungselement dar. Eine derartige Lösung ist konstruktiv aufwändig. Hinzu kommt, dass die Notentriegelung im beschriebenen Fall praktisch nur vom Innenraum des Kraftfahrzeuges her - und nicht von außen - vorgenommen werden kann. Das ist dann problematisch, wenn das Kraftfahrzeug nicht mehr geöffnet werden kann.

Zu diesem Zweck schlägt der weitere gattungsbildende Stand der Technik nach der DE 10 2013 222 509 A1 ein Lademodul für die Aufladung von elektrischen Speichermedien elektrisch angetriebener Kraftfahrzeuge vor. Dabei ist eine mit Hilfe eines Betätigungselementes manuell betätigbare Notentriegelungsvorrichtung vorgesehen, mit deren Hilfe das Riegelelement in seine Entriegelungsstellung überführt werden kann. Außerdem wird ein Werkzeug angesprochen, mit dessen Hilfe eine manuelle Betätigungskraft auf das Betätigungselement der Notentriegelungsvorrichtung übertragen werden kann.

Die bekannte Notentriegelung ist zwar generell von außen her bei einer geöffneten Klappe zur Abdeckung der Ladesteckdose zugänglich. Allerdings handelt es sich bei dem Betätigungselement um einen mit dem Riegelelement verbundenen Schwenkhebel, welcher außen an einem den Antrieb und das Riegelelement aufnehmenden Gehäuse angebracht ist. Zusätzlich ist eine durch eine dünne Trennschicht aus einer Kunststofffolie verschlossene Durchlassöffnung für das Werkzeug vorgesehen. Die Trennschicht bzw. Durchlass- öffnung verschließt temporär eine zusätzliche Führung. Die Führung ist auf das Betätigungselement bzw. den Schwenkhebel gerichtet und dient zur definierten translatorischen Bewegung des Werkzeuges. Daraus resultiert erneut ein relativ hoher konstruktiver Aufwand. Hinzu kommt, dass die Führung bei der bekannten Lehre nach der DE 10 2013 222 509 A1 an das zu benutzende Werkzeug ebenso wie an das Kraftfahrzeug selbst angepasst werden muss, was eine universelle Notentriegelung erschwert. Hier will die Erfindung insgesamt Abhilfe schaffen. Aus der WO 2019/073854 A1 ist ebenfalls eine elektrische Ladevorrichtung für ein Kraftfahrzeug bekannt, bei der zu einer Notentriegelung eines Riegelelements, welches zur Verriegelung eines Ladesteckers in einer Ladedose vorgesehen ist, ein Betätigungselement vorgesehen ist, das bei der Notentriegelung mittels eines Werkzeugs betätigt wird.

Aus der DE 10 2017 123206 A1 schließlich ist eine elektrische Anschlussvorrichtung für insbesondere Elektro- oder Hybridkraftfahrzeuge bekannt, die verfügt in ihrem grundsätzlichen Aufbau über einen Ladestecker und eine Ladesteckdose verfügt. Der Ladestecker wird in der Ladesteckdose mit Hilfe eines verfahrbaren Riegelelementes lösbar verankert. Zusätzlich ist ein Antrieb vorgesehen, welcher das Riegelelement zu Stellbewegungen gegenüber einer Führung beaufschlagt. Erfindungsgemäß wird das Riegelelement gehäuseseitig in einer bewegbaren Abstützung des Antriebes als Bestandteil der Führung aufgenommen.

Der Erfindung liegt das technische Problem zugrunde, eine derartige Ladevorrichtung für ein Kraftfahrzeug so weiter zu entwickeln, dass der konstruktive Aufwand verringert ist und die Notentriegelung unter Rückgriff auf verschiedene zur Verfügung stehende Werkzeuge flexibel und einfach vor Ort vorgenommen werden kann.

Zur Lösung dieser technischen Problemstellung schlägt die Erfindung einer gattungsgemäßen elektrischen Ladevorrichtung für ein Kraftfahrzeug vor, dass das Betätigungselement als wenigstens ein Getrieberad des Antriebes beidseitig axial übergreifender U-förmiger Hebel ausgebildet ist, der an seiner U-Basis einen Ansatzbereich für das Werkzeug aufweist, und dass der Antrieb variable Lagerstellen aufweist, die durch das Betätigungselement zur Notentriegelung gelöst werden.

Im Gegensatz zum Stand der Technik nach der DE 10 2013 222 509 A1 greift also das Werkzeug nicht unmittelbar am Verriegelungselement an, sondern - wenn man so will - mittelbar. Denn mit Hilfe des Betätigungselementes wird zur Notentriegelung des Riegelelementes eine im Normalbetrieb fixierte Lagerung des Antriebes gelöst, indem variable Lagerstellen gelöst werden. Das heißt, während des Normalbetriebes ist der Antrieb typischerweise in einem den Antrieb aufnehmenden Gehäuse gelagert. Die Lagerstellen sind dabei fixiert. Auf diese Weise können vom Antrieb auf die Lagerung allgemein bzw. die einzelnen Lagerstellen ausgeübte Radialkräfte problemlos aufgenommen werden. Das geschieht meistens mit Hilfe des den Antrieb aufnehmenden Gehäuses, welches entsprechende Lagerstellen zur Verfügung stellt.

Neben gleichsam fixen und unveränderbaren Lagerstellen sind darüber hinaus erfindungsgemäß variable Lagerstellen realisiert. Diese variablen Lagerstellen lassen sich zur Notentriegelung des Riegelelementes lösen, und zwar mit Hilfe des Betätigungselementes. Demgegenüber sind die variablen Lagerstellen im Normalbetrieb fixiert und können folglich im Normalbetrieb angreifende Radialkräfte einzelner Bestandteile eines zumeist vorgesehenen Getriebes, des Elektromotors oder von weiteren Antriebsbestandteilen aufnehmen.

Im Zuge der Notentriegelung des Riegelelementes sorgt nun das manuell beaufschlagbare Betätigungselement dafür, dass die im Normalbetrieb fixierten variablen Lagerstellen gelöst werden. Die fixen Lagerstellen bleiben demgegenüber unverändert. Da die variablen Lagerstellen zur Notentriegelung des Riegelelementes gelöst sind und folglich keine Radialkräfte (mehr) aufnehmen können, kann das zuvor in seiner verriegelten Position befindliche Riegelelement beaufschlagt werden und in seine entriegelte Position überführt werden. Das ist beispielsweise automatisch möglich. Denn nach vorteilhafter Ausgestaltung nimmt der Antrieb bei gelöster Lagerung das Riegelelement in seine entriegelte Position selbststätig mit. Hierfür mag beispielsweise eine Feder oder können mehrere Federn sorgen, welche bei gelöster Lagerung den Antrieb bzw. einen dann frei gewordenen Antriebsbestandteil elastisch beaufschlagen, wobei der Antriebsbestandteil das Riegelelement in seine entriegelte Position in diesem Fall selbsttätig mitnimmt.

Das Betätigungselement ist im Allgemeinen mit einer Rückstellfeder ausgerüstet. Die Rückstellfeder sorgt dafür, dass das Betätigungselement im Regelfall seine zum Normalbetrieb gehörige Position einnimmt, in welcher die Lagerung des Antriebes bzw. die variablen Lagerstellen fixiert werden. Dadurch kann eine unbeabsichtigte Notentriegelung ausgeschlossen werden. Erst im Notfall und bei einer vorzunehmenden Notentriegelung sowie meistens bei am Betätigungselement angesetzten Werkzeug lässt sich das Betätigungselement gegen die Kraft der Rückstellfeder beaufschlagen, sodass die zuvor im Normalbetrieb fixierte Lagerung des Antriebes zur Notentriegelung des Riegelelementes gelöst wird.

Das zuvor bereits beschriebene und den Antrieb aufnehmende Gehäuse ist im Allgemeinen zweiteilig mit einer Unterschale und einer Oberschale ausgebildet. Dabei ist auch das Betätigungselement in dem fraglichen und den Antrieb aufnehmenden Gehäuse gelagert. Meistens ist die Auslegung so getroffen, dass der Antrieb und das Betätigungselement gemeinsam primär in der Unterschale gelagert werden. Demgegenüber fungiert die Oberschale überwiegend als Verschluss der Unterschale und sorgt insgesamt dafür, dass die Lagerstellen für den Antrieb fixiert werden.

Bei dem Betätigungselement selbst handelt es sich erfindungs um einen U-förmigen Hebel. Dieser U-förmige Hebel ist so ausgelegt, dass er wenigstens ein Getrieberad des Antriebes beidseitig axial übergreift. Bei dem fraglichen Getrieberad handelt es sich meistens um das ausgangsseitige Getrieberad, welches mit einem in eine Ausnehmung des Verriegelungselementes eingreifenden Zapfen ausgerüstet ist. Das Betätigungselement definiert nun die beiden zuvor bereits angesprochenen variablen Lagerstellen beidseitig des mittig angeordneten Getrieberades. Sobald das Betätigungselement manuell beaufschlagt wird, werden die beiden variablen Lagerstellen gelöst und kann sich das Getrieberad aus seiner im Normalbetrieb eingenommenen Position entfernen. Da das Getrieberad mit seinem ausgangsseitigen Zapfen in die Ausnehmung des Riegelelementes eingreift, wird bei diesem Vorgang zugleich das Riegelelement bewegt und mitgenommen, nämlich zum Zwecke der Notentriegelung von seiner zuvor im Normalbetrieb eingenommenen Position "verriegelt" in die Stellung "entriegelt" überführt.

Zur Beaufschlagung des U-förmigen Hebels bzw. des Betätigungselementes ist erfindungsgemäß an seiner U-Basis ein Ansatzbereich für das manuell beaufschlagbare Werkzeug vorgesehen. Dieser Ansatzbereich kann flexibel und variabel gestaltet werden, sodass sich im Bedarfsfall ganz unterschiedliche Werkzeuge ansetzen lassen. Grundsätzlich kann das fragliche Werkzeug auch fest mit dem U-förmigen Hebel verbunden sein, beispielsweise als am Hebel angreifende Kurbel ausgelegt werden.

Das Betätigungselement bzw. der U-förmige Hebel ist im Allgemeinen als Schwenkhebel ausgebildet. Folglich lässt sich das Betätigungselement bzw. der Schwenkhebel gegenüber seiner Lagerung im Gehäuse verschwenken. Dabei nimmt das Betätigungselement bzw. der Schwenkhebel zumindest zwei Positionen ein, nämlich eine zum Normalbetrieb gehörige Funktionsstellung und eine zur Notentriegelung korrespondierende Funktionsstellung. Tatsächlich ist die Auslegung weiter so getroffen, dass zur Notentriegelung des Riegelelementes der Schwenkhebel über ein Mitnahmeelement am Antrieb das Riegelelement mittelbar beaufschlagt. Das heißt, im Zuge der zuvor bereits angesprochenen weitergehenden Beaufschlagung des Betätigungselementes kommt es dazu, dass das Betätigungselement bzw. der Schwenkhebel mit dem Mitnahmeelement am Antrieb wechselwirken kann.

Meistens findet sich dieses Mitnahmeelement an dem im Zuge der Notentriegelung gelösten Getrieberad. Im Anschluss an die Notentriegelung kann nun der Schwenkhebel bei seiner weitergehenden Schwenkbewegung das Mitnahmeelement an dem besagten Getrieberad beaufschlagen. Da das Getrieberad mit seinem ausgangsseitigen Zapfen in die Ausnehmung des Riegelelementes eingreift, wird hierbei zugleich das Riegelelement beaufschlagt, konkret von seiner zuvor eingenommenen Position "verriegelt" in die Position "entriegelt" überführt.

Durch die erfindungsgemäße Ausführung wird eine elektrische Ladevorrichtung für ein Kraftfahrzeug bereitgestellt, bei der zur Notentriegelung nicht das gesamte Getriebe zurückgestellt werden muss, sondern lediglich das Riegelelement. Hierdurch muss zur Notentriegelung eine deutlich geringere Kraft als bei Rückstellung des gesamten Getriebes aufgebracht werden. Ferner ist die elektrische Ladevorrichtung für ein Kraftfahrzeug zur Verfügung gestellt, die konstruktiv besonders einfach aufgebaut ist. Denn zur Realisierung der Notentriegelung ist im Wesentlichen und lediglich das Betätigungselement bzw. der in diesem Zusammenhang vorgesehene Schwenkhebel realisiert. Weitergehende Maßnahmen sind entbehrlich. Dieser Schwenkhebel kann darüber hinaus mit praktisch jedem denkbaren Werkzeug oder auch direkt manuell beaufschlagt werden, sodass die Notentriegelung flexibel und einfach vor Ort ohne großen Aufwand vorgenommen werden kann. In diesem Zusammenhang werden auch etwaige Beschädigungen des Gehäuses vermieden, wie sie im Rahmen der gattungsbildenden Lehre nach der DE 10 2013 222 509 A1 praktisch unumgänglich sind. Das führt zu einer weiteren Kostenreduktion, da nach einem Vorgang der Notentriegelung prinzipiell eine Revision nicht erforderlich ist.

Im Folgenden wird die Erfindung anhand einer lediglich ein Ausführungsbeispiel darstellenden Zeichnung näher erläutert; es zeigen:
- Fig. 1A, 1B: die erfindungsgemäße Ladevorrichtung in einer Übersicht,
- Fig. 2: eine Seitenansicht des Gegenstandes nach der Fig. 1 mit dem Verriegelungselement und
- Figuren 3A bis 3C: das Verriegelungselement in unterschiedlichen Funktionsstellungen, jeweils reduziert auf die wesentlichen Bestandteile, wobei die Figur 3A zur Stellung "entriegelt", die Fig. 3B zur Position "verriegelt" und schließlich die Fig. 3C zur Situation "notentriegelt" korrespondiert.

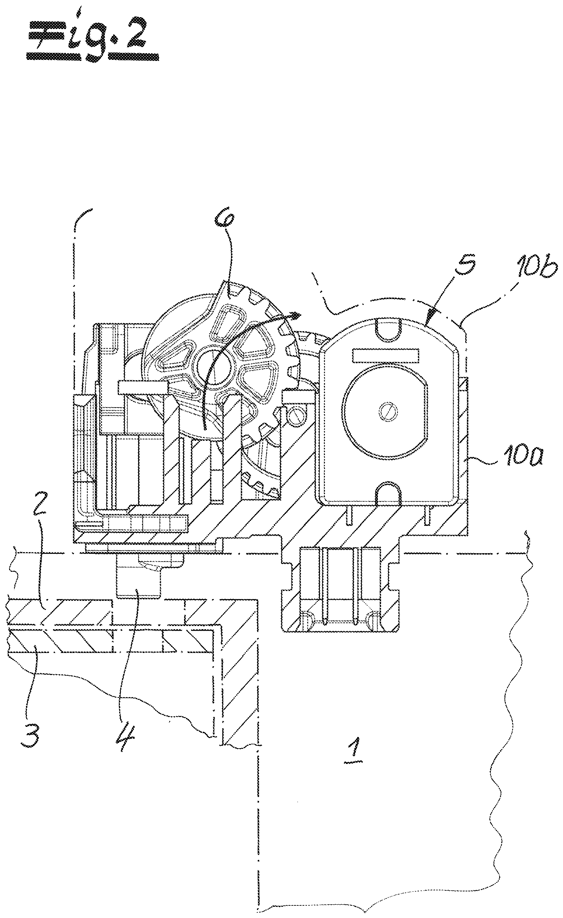

In den Figuren ist eine elektrische Ladevorrichtung für ein lediglich in der Fig. 2 angedeutetes Kraftfahrzeug 1 dargestellt. Bei dem Kraftfahrzeug 1 handelt es sich im Ausführungsbeispiel um ein Elektro- oder Hybridkraftfahrzeug. Die elektrische Ladevorrichtung ist zu diesem Zweck mit einer kraftfahrzeugseitigen Ladesteckdose 2 und einem ladesäulenseitigen Ladestecker 3 ausgerüstet. Es kann auch umgekehrt vorgegangen werden. Dann findet sich kraftfahrzeugseitig der Ladestecker 3, wohingegen ladesäulenseitig die Ladesteckdose 2 vorgesehen ist, was allerdings nicht dargestellt wird.

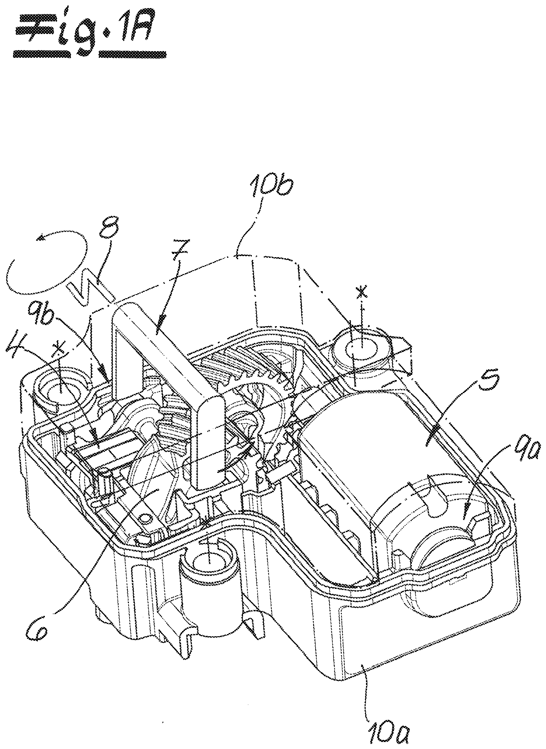

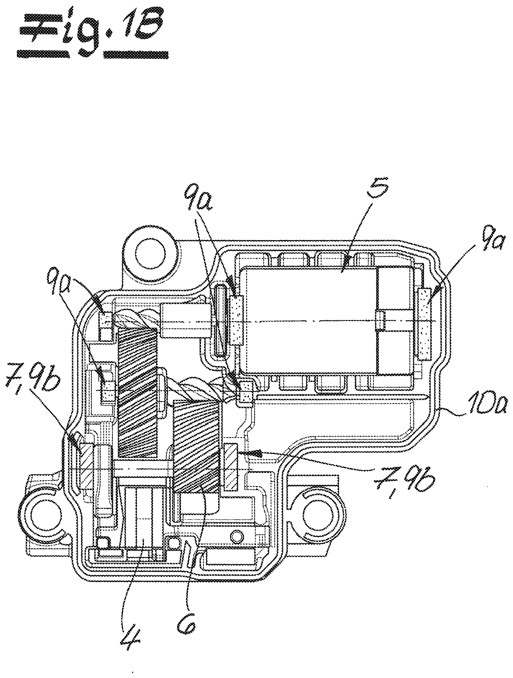

Zum grundsätzlichen Aufbau gehört noch ein insbesondere in den Figuren 1A, 1B zu erkennender motorischer Antrieb 5, 6, welcher mit einem Elektromotor 5 und einem Getriebe 6 bzw. einem abtriebsseitigen Getrieberad 6 ausgerüstet ist, welches nachfolgend noch näher betrachtet wird. Mit Hilfe des motorischen Antriebes 5, 6 kann ein Riegelelement 4 zur lösbaren Verriegelung des Ladesteckers 3 in der Ladesteckdose 2 verfahren werden.

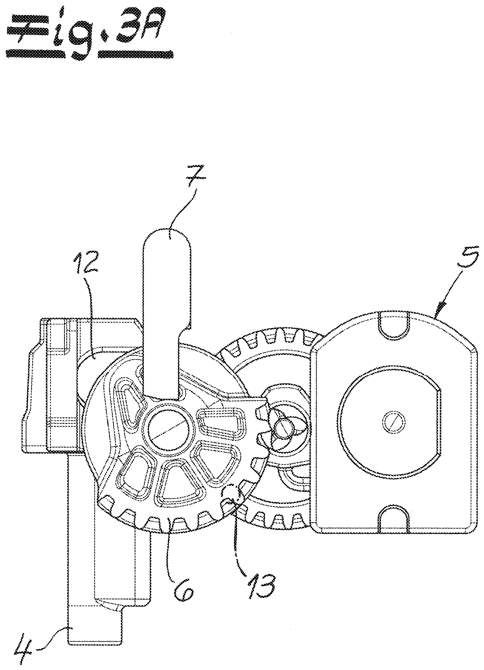

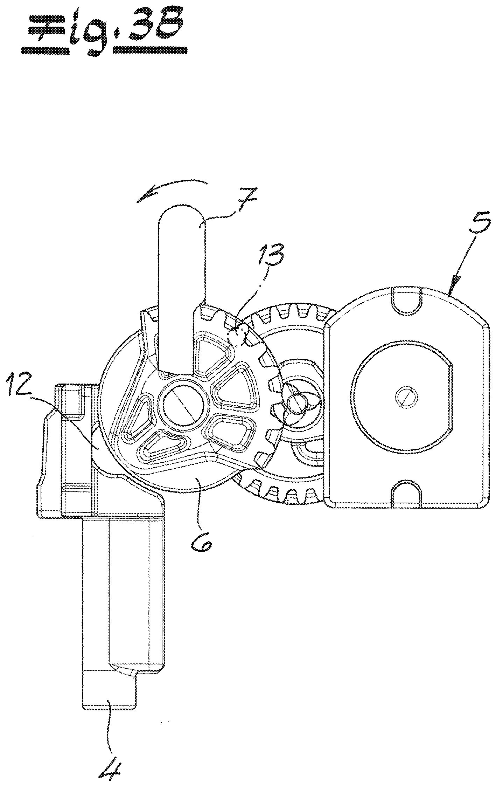

In diesem Zusammenhang zeigt die Fig. 3A den Zustand "entriegelt" des Ladesteckers 3 gegenüber der Ladesteckdose 2 mit entsprechend zurückgezogenem oder eingefahrenem Riegelelement 4. Demgegenüber ist in der Fig. 3B die Situation "verriegelt" dargestellt, in welcher das Riegelelement 4 in eine Ausnehmung im Ladestecker 3 eintaucht, um den in die Ladesteckdose 2 eingesteckten Ladestecker 3 gegenüber der Ladesteckdose 2 einwandfrei zu verriegeln.

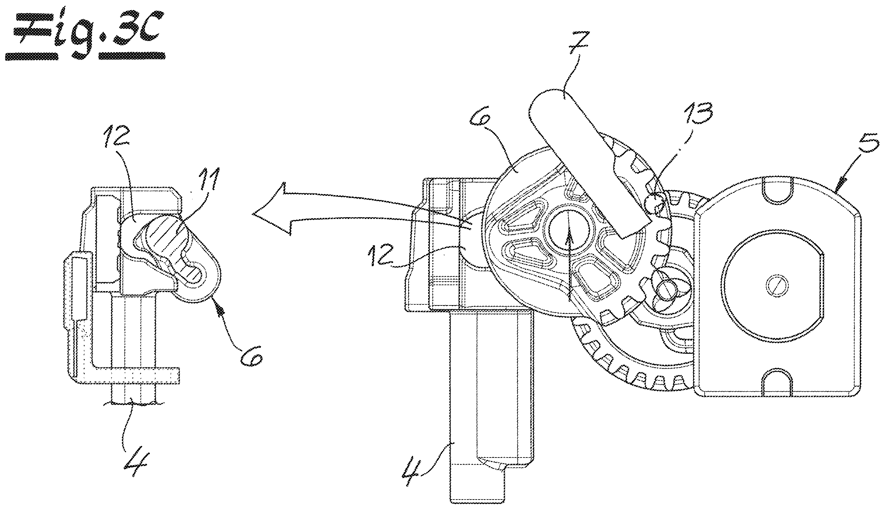

Erfindungsgemäß und von besonderer Bedeutung ist nun eine in der Fig. 3C dargestellte Notentriegelung des Riegelelementes 4. Zu diesem Zweck ist ein insbesondere in den Figuren 1A und 3A bis 3C dargestelltes sowie manuell beaufschlagbares Betätigungselement 7 vorgesehen. Das Betätigungselement 7 lässt sich direkt manuell beaufschlagen oder auch mit Hilfe eines lediglich in der Fig. 1A angedeuteten Werkzeuges 8. Bei dem Betätigungselement 7 handelt es sich um einen Schwenkhebel 7, welcher beispielhaft durch das Werkzeug 8 verursachte und in der Fig. 1A angedeutete Schwenkbewegungen im Gegenuhrzeigersinn vollführen kann, wie sie bei einem Vergleich der Figuren 3B und 3C deutlich werden und durch entsprechende Pfeile angedeutet sind. Um die beschriebene Schwenkbewegung des Betätigungselementes bzw. Schwenkhebels 7 im Gegenuhrzeigersinn im Rahmen des gezeigten Beispiels zu realisieren und umzusetzen, greift an dem Betätigungselement 7 ein als Kurbel ausgebildetes Werkzeug 8 an und sorgt durch eine entsprechend in der Fig. 1A angedeutete Gegenuhrzeigersinndrehung für die gewünschte Schwenkbewegung des Schwenkhebels 7 ebenfalls im Gegenuhrzeigersinn. In alternativen Ausgestaltungen kann das Werkzeug 8 anstelle als Kurbel als ein anderes Bauteil zur Erzeugung einer Schwenkbewegung des Schwenkhebels 7 ausgeführt sein, beispielsweise als Seilzug.

Der Antrieb 5, 6 verfügt nun über unterschiedliche und insbesondere in der Fig. 1B angedeutete Lagerstellen 9a, 9b. Tatsächlich sind einerseits fixe Lagerstellen 9a und andererseits variable Lagerstellen 9b realisiert. Anhand der Fig. 1B erkennt man, dass die variablen Lagerstellen 9b beidseitig des Getrieberades 6 vorgesehen sind. Demgegenüber ist der Elektromotor 5 sowie ein weiteres zwischengeschaltetes Getrieberad mit fixen Lagerstellen 9a ausgerüstet.

Im Bereich der variablen Lagerstellen 9b sorgt das Betätigungselement 7 für ihre Definition. Demgegenüber stellen sich die fixen Lagerstellen 9a dadurch ein, dass die betreffenden Antriebsbestandteile, also der Elektromotor 5 und das zwischengeschaltete Getrieberad, mit Hilfe einer Oberschale 10b festgelegt werden. Tatsächlich wird der Antrieb 5, 6 insgesamt in einem Gehäuse 10a, 10b gelagert. Das Gehäuse 10a, 10b ist zweiteilig mit einer Unterschale 10a und der Oberschale 10b ausgerüstet. Der Antrieb 5, 6 ist dabei primär in der Unterschale 10a gelagert, wogegen das Betätigungselement 7 primär in der Oberschale 10b gelagert ist.

Erfindungsgemäß ist nun die Auslegung so getroffen, dass das Betätigungselement 7 eine Lagerung des Antriebes 5, 6 zur Notentriegelung des Riegelelementes 4 löst. Das bedeutet konkret, dass im Normalbetrieb sämtliche Antriebsbestandteile des Antriebes 5, 6 fixiert sind und folglich die korrespondierenden Lagerstellen 9a, 9b Radialkräfte der Antriebsbestandteile des Antriebes 5, 6 sämtlich aufnehmen können. Dazu werden die fixen Lagerstellen 9a durch das Wechselspiel von Lagerausnehmungen in der Unterschale 10a mit entsprechenden Lagerausnehmungen in der Oberschale 10b definiert. Für die variablen Lagerstellen 9b gilt, dass diese erneut durch Lagerschalen in der Unterschale 10a allerdings in Kombination mit dem Betätigungselement bzw. Schwenkhebel 7 definiert werden. Da das Betätigungselement bzw. der Schwenkhebel 7 im Beispielfall mit Hilfe des Werkzeuges 8 verschwenkt werden kann, kommt es bei einem solchen eingeleiteten Vorgang zur Notentriegelung des Riegelelementes 4 dazu, dass die variablen Lagerstellen 9b gelöst werden. Das führt insgesamt dazu, dass die Lagerung des Antriebes 5, 6 zur Notentriegelung des Riegelelementes 4 gelöst wird.

Bei gelöster Lagerung kann nun generell das Riegelelement 4 in seine entriegelte Position selbsttätig mitnehmen. Denn die gelöste Lagerung des Antriebes 5, 6 korrespondiert konkret und im Ausführungsbeispiel dazu, dass das ausgangsseitige Getrieberad 6 im Bereich seiner variablen Lagerstellen 9b nicht (mehr) axial fixiert ist und folglich gegenüber der Unterschale 10a praktisch "angehoben" wird, wie man dies beim Übergang von der Fig. 3B ("verriegelt") zur Fig. 3C ("notentriegelt") nachvollziehen kann. Da das ausgangsseitige Getrieberad 6 mit einem insbesondere in der Fig. 3C dargestellten Zapfen 11 in eine Ausnehmung 12 des Riegelelementes 4 eingreift, wird bei diesem Vorgang des "Anhebens" des ausgangsseitigen Getrieberades 6 zugleich auch das Riegelelement 4 angehoben und mitgenommen.

Dadurch geht das Riegelelement 4 beim Übergang von der Fig. 3B zur Fig. 3C von seiner zuvor eingenommenen Position "verriegelt" in die Stellung "notentriegelt" bzw. "entriegelt" über. Das kann - wie gesagt - selbsttätig dadurch geschehen, dass nach Lösen der Lagerung des Antriebes 5, 6 durch das Betätigungselement 7 das fragliche Getrieberad 6 beispielsweise federunterstützt "angehoben" wird und hierbei das in seiner verriegelten Stellung befindliche Riegelelement 4 mitnimmt und in die Position "entriegelt" überführt.

Im Rahmen des Ausführungsbeispiels und nach bevorzugter Variante wird jedoch so vorgegangen, dass der Antrieb 5, 6 bei gelöster Lagerung des Riegelelementes 4 in seine entriegelte Position durch eine weitergehende Beaufschlagung des Betätigungselement 7 überführt wird. Das heißt, zunächst sorgt die mit Hilfe des Werkzeuges 8 verursachte Schwenkbewegung des Betätigungselementes respektive Schwenkhebels 7 im Gegenuhrzeigersinn dafür, dass die variablen Lagerstellen 9b geöffnet und folglich das abtriebsseitige Getrieberad 6 von den Lagerstellen 9b und damit der Unterschale 10a entfernt respektive "angehoben" wird. Die weitergehende Beaufschlagung des Betätigungselementes 7 im Gegenuhrzeigersinn hat nun zur Folge, dass das Betätigungselement 7 mit einem insbesondere in der Fig. 3C zu erkennenden Mitnahmeelement 13 am Antrieb 5, 6 und konkret am abtriebsseitigen Getrieberad 6 wechselwirken kann. Dadurch beaufschlagt das Betätigungselement bzw. der Schwenkhebel 7 zur Notentriegelung des Riegelelementes 4 über das besagte Mitnahmeelement 13 am Antrieb 5, 6 bzw. am abtriebsseitigen Getrieberad 6 das Riegelelement 4 mittelbar.

Anhand einer vergleichenden Betrachtung der Figuren 1A und 3A bis 3C wird deutlich, dass das Betätigungselement 7 als wenigstens ein Getrieberad 6, konkret das abtriebsseitige Getrieberad 6 des Antriebes 5, 6, beidseitig axial übergreifender U-förmiger Hebel bzw. Schwenkhebel 7 ausgebildet ist. Der solchermaßen ausgelegte U-förmige Hebel 7 ist an seiner U-Basis mit einem Ansatzbereich für das zuvor bereits besprochene Werkzeug 8 ausgerüstet. Das Werkzeug 8 kann mit dem Ansatzbereich und folglich dem U-förmigen Schwenkhebel 7 gekoppelt werden, um den Schwenkhebel 7 im in der Fig. 1A angedeuteten Gegenuhrzeigersinn zu verschwenken, damit die Notentriegelung des Verriegelungselementes 4 eingeleitet werden kann.

Anhand der Figuren 3A und 3B erkennt man schließlich, dass das am Antrieb 5, 6 vorgesehene bzw. konkret am ausgangsseitigen Getrieberad 6 realisierte Mitnahmeelement 13 während des Normalbetriebes mit dem Betätigungselement bzw. Schwenkhebel 7 nicht wechselwirken kann. Denn ausgehend von der in der Fig. 3A dargestellten Funktionsstellung "entriegelt" sorgt ein Verriegelungsvorgang beim Übergang zur Position "verriegelt" in der Fig. 3 B dafür, dass das fragliche Mitnahmeelement 13 von einer zuvor eingenommen Position auf in etwa "5 Uhr" nach der Fig. 3A in eine Position bei in etwa "2 Uhr" in der Fig. 3B verschwenkt wird, und zwar im Ausführungsbeispiel um in etwa 90°. Hierbei kommt es nicht zur Wechselwirkung mit dem Betätigungselement bzw. Schwenkhebel 7.

Erst wenn das Betätigungselement 7 ausgehend von der Stellung "verriegelt" in der Fig. 3B im dort angedeuteten Gegenuhrzeigersinn verschwenkt wird, nähern sich die letztlich die variablen Lagerstellen 9b definierenden Füße am jeweiligen U-Schenkel dem Mitnahmeelement 13. Jetzt ist das ausgangsseitige Getrieberad 6 und damit die Lagerung des Antriebes 5, 6 zur Notentriegelung frei. Die weitergehende Beaufschlagung des Betätigungselementes respektive Schwenkhebels 7 hat nun zur Folge, dass der U-Schenkel des Schwenkhebels 7 gegen das Mitnahmeelement 13 des ausgangsseitigen Getrieberades 6 fährt. Dadurch wird das Getrieberad 6 zunehmend gegenüber der Unterschale 10a angehoben. Gleiches gilt für das Riegelelement 4, weil das ausgangsseitige Getrieberad 6 mit seinem Zapfen 11 in die Ausnehmung 12 am Riegelelement 4 eingreift, sodass bei dem beschriebenen Anhebevorgang des ausgangsseitigen Getrieberades 6 zugleich das Riegelelement 4 mitgenommen wird und dadurch von der zuvor eingenommenen Position "verriegelt" in die Stellung "notentriegelt" bzw. "entriegelt" nach der Fig. 3C übergeht.

Das Betätigungselement bzw. der Schwenkhebel 7 ist mit einer nicht dargestellten Rückstellfeder ausgerüstet. Diese Rückstellfeder sorgt dafür, dass ohne Beaufschlagung des Betätigungselementes 7 mit dem Werkzeug 8 das Betätigungselement 7 durchgängig seine zum Normalbetrieb gehörige und in den Figuren 3A und 3B dargestellte Normalstellung einnimmt. Die Beaufschlagung des Betätigungselementes 7 im Zuge der Notentriegelung korrespondiert also dazu, dass das Betätigungselement 7 gegen die Kraft der fraglichen Rückstellfeder beaufschlagt werden muss. Dadurch ist sichergestellt, dass im Normalbetrieb sämtliche Antriebsbestandteile des Antriebes 5, 6 einwandfrei fixiert sind und die zugehörigen Lagerstellen 9a, 9b Radialkräfte aufnehmen können.

### Bezugszeichen

- 1: Kraftfahrzeug
- 2: Ladesteckdose
- 3: Ladestecker
- 4: Riegelelement
- 5, 6: Antrieb,
- 6: Getrieberad
- 7: Betätigungselement
- 8: Werkzeug
- 9a, 9b: Lagerstellen
- 9a: fixe Lagerstellen
- 9b: variable Lagerstellen
- 10a, 10b: Gehäuse
- 10a: Unterschale
- 10b: Oberschale

## Patentansprüche

1. Elektrische Ladevorrichtung für ein Kraftfahrzeug (1), insbesondere ein Elektro- oder Hybridkraftfahrzeug, mit einer kraftfahrzeugseitigen Ladesteckdose (2) und einem ladesäulenseitigen Ladestecker (3), oder umgekehrt, und mit einem motorisch durch einen Antrieb (5, 6) verfahrbaren Riegelelement (4) zur lösbaren Verriegelung des Ladesteckers (3) in der Ladesteckdose (2), wobei zur Notentriegelung des Riegelelementes (4) ein mit Hilfe eines Werkzeuges (8) manuell beaufschlagbares Betätigungselement (7) vorgesehen ist, wobei das Betätigungselement (7) eine Lagerung des Antriebes (5, 6) zur Notentriegelung des Riegelelementes (4) löst, **dadurch gekennzeichnet, dass** das Betätigungselement (7) als wenigstens ein Getrieberad (6) des Antriebes (5, 6) beidseitig axial übergreifender U-förmiger Hebel ausgebildet ist, der an seiner U-Basis einen Ansatzbereich für das Werkzeug (8) aufweist, und dass der Antrieb (5, 6) variable Lagerstellen (9b) aufweist, die durch das Betätigungselement (7) zur Notentriegelung gelöst werden.

2. Vorrichtung nach Anspruch 1, **dadurch gekennzeichnet, dass** der Antrieb (5, 6) bei gelöster Lagerung das Riegelelement (4) in seine entriegelte Position durch eine weitergehende Beaufschlagung des Betätigungselementes (7) überführt wird.

3. Vorrichtung nach einem der Ansprüche 1 bis 2, **dadurch gekennzeichnet, dass** das Betätigungselement (7) eine Rückstellfeder aufweist, die dafür sorgt, dass das Betätigungselement (7) ohne Beaufschlagung mit dem Werkzeug (8) durchgängig seine zum Normalbetrieb gehörige Normalstellung einnimmt.

4. Vorrichtung nach einem der Ansprüche 1 bis 3, **dadurch gekennzeichnet, dass** das Betätigungselement (7) in einem den Antrieb (5, 6) aufnehmenden Gehäuse (10a, 10b) gelagert ist.

5. Vorrichtung nach Anspruch 4, **dadurch gekennzeichnet, dass** das Gehäuse (10a, 10b) zweiteilig mit Unterschale (10a) und Oberschale (10b) ausgebildet ist.

6. Vorrichtung nach Anspruch 5, **dadurch gekennzeichnet, dass** der Antrieb (5, 6) und das Betätigungselement (7) primär in der Oberschale (10b) gelagert sind.

## Claims

1. Electric charging device for a motor vehicle (1), in particular an electric or hybrid motor vehicle, comprising a charging socket (2) on the motor vehicle side and a charging plug (3) on the charging station side, or vice versa, and comprising a locking element (4) that can be moved by a motor by means of a drive (5, 6) for releasably locking the charging plug (3) in the charging socket (2), an operating element (7) that can be manually actuated with the aid of a tool (8) being provided for emergency unlocking of the locking element (4), the actuating element (7) releasing a bearing of the drive (5, 6) for emergency unlocking of the locking element (4), **characterized in that** the operating element (7) is designed as a U-shaped lever which axially overlaps at least one gear wheel (6) of the drive (5, 6) on both sides and which has an attachment region for the tool (8) on its U-base, and **in that** the drive (5, 6) has variable bearing points (9b) which are released by the operating element (7) for emergency unlocking.

2. Device according to claim 1, **characterized in that** the drive (5, 6), when the bearing is released, the locking element (4) is transferred into its unlocked position by a further application of the operating element (7).

3. Device according to either claim 1 or claim 2, **characterized in that** the operating element (7) has a return spring which ensures that the operating element (7) continuously assumes its normal position for normal operation without the application of the tool (8).

4. Device according to any of claims 1 to 3, **characterized in that** the operating element (7) is mounted in a housing (10a, 10b) accommodating the drive (5, 6).

5. Device according to claim 4, **characterized in that the** housing (10a, 10b) is constructed in two parts so as to have a lower shell (10a) and an upper shell (10b).

6. Device according to claim 5, **characterized in that** the drive (5, 6) and the operating element (7) are primarily mounted in the upper shell (10b).

## Revendications

1. Dispositif de charge électrique pour un véhicule automobile (1), en particulier un véhicule automobile électrique ou hybride, comportant une prise de charge femelle (2) côté véhicule automobile et une prise de charge mâle (3) côté colonne de charge, ou inversement, et comportant un élément de verrouillage (4) pouvant être déplacé de manière motorisée par un entraînement (5, 6) pour le verrouillage de manière amovible de la prise de charge mâle (3) dans la prise de charge femelle (2), dans lequel, pour le déverrouillage d'urgence de l'élément de verrouillage (4), un élément d'actionnement (7) pouvant être sollicité manuellement à l'aide d'un outil (8) est prévu, dans lequel l'élément d'actionnement (7) desserre un palier de l'entraînement (5, 6) pour le déverrouillage d'urgence de l'élément de verrouillage (4), **caractérisé en ce que** l'élément d'actionnement (7) est conçu comme un levier en forme de U recouvrant axialement des deux côtés au moins une roue d'engrenage (6) de l'entraînement (5, 6), lequel levier présente au niveau de sa base en U une zone de mise en place pour l'outil (8), et **en ce que** l'entraînement (5, 6) présente des points d'appui (9b) variables qui sont desserrés par l'élément d'actionnement (7) pour le déverrouillage d'urgence.

2. Dispositif selon la revendication 1, **caractérisé en ce que,** lorsque le palier est desserré, l'entraînement (5, 6) l'élément de verrouillage (4) est transféré dans sa position déverrouillée par une sollicitation plus poussée de l'élément d'actionnement (7).

3. Dispositif selon l'une des revendications 1 à 2, **caractérisé en ce que** l'élément d'actionnement (7) présente un ressort de rappel qui assure que l'élément d'actionnement (7) prend en continu sa position normale correspondant au fonctionnement normal sans être sollicité par l'outil (8).

4. Dispositif selon l'une des revendications 1 à 3, **caractérisé en ce que** l'élément d'actionnement (7) est monté dans un boîtier (10a, 10b) recevant l'entraînement (5, 6).

5. Dispositif selon la revendication 4, **caractérisé en ce que** le boîtier (10a, 10b) est conçu en deux parties avec une coque inférieure (10a) et une coque supérieure (10b).

6. Dispositif selon la revendication 5, **caractérisé en ce que** l'entraînement (5, 6) et l'élément d'actionnement (7) sont montés de manière primaire dans la coque supérieure (10b).
